(19) Europäisches Patentamt
European Patent Office
Office européen des brevets

(11) **EP 3 717 770 B1**

(12) **EUROPÄISCHE PATENTSCHRIFT**

(45) Veröffentlichungstag und Bekanntmachung des Hinweises auf die Patenterteilung:
**21.07.2021 Patentblatt 2021/29**

(21) Anmeldenummer: **19707720.9**

(22) Anmeldetag: **15.02.2019**

(51) Int Cl.:
*F03D 7/04* *(2006.01)* *F03B 15/00* *(2006.01)*
*F03B 17/06* *(2006.01)*

(86) Internationale Anmeldenummer:
**PCT/EP2019/053814**

(87) Internationale Veröffentlichungsnummer:
**WO 2019/097092 (23.05.2019 Gazette 2019/21)**

(54) **REGELUNGSSYSTEM ZUR REGELUNG EINER TURBINE, VERFAHREN ZUR REGELUNG EINER TURBINE UND WINDTURBINE**

CONTROL SYSTEM FOR CONTROLLING A TURBINE, METHOD FOR CONTROLLING A TURBINE, AND WIND TURBINE

SYSTÈME DE RÉGULATION DESTINÉ À RÉGULER UNE TURBINE, PROCÉDÉ DESTINÉ À RÉGULER UNE TURBINE ET TURBINE D'ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2018 DE 102018001172**

(43) Veröffentlichungstag der Anmeldung:
**07.10.2020 Patentblatt 2020/41**

(73) Patentinhaber: **Universität Stuttgart**
**70174 Stuttgart (DE)**

(72) Erfinder:
• **SCHLIPF, David**
**70569 Stuttgart (DE)**
• **RAACH, Steffen**
**70195 Stuttgart (DE)**
• **HAIZMANN, Florian**
**70597 Stuttgart (DE)**

(74) Vertreter: **Müller-Boré & Partner**
**Patentanwälte PartG mbB**
**Friedenheimer Brücke 21**
**80639 München (DE)**

(56) Entgegenhaltungen:
**WO-A1-2017/149657 US-A1- 2017 167 470**

• **AHO JACOB ET AL: "Optimal trajectory tracking control for wind turbines during operating region transitions", 2015 AMERICAN CONTROL CONFERENCE (ACC), IEEE, 17. Juni 2013 (2013-06-17), Seiten 1424-1429, XP032476119, ISSN: 0743-1619, DOI: 10.1109/ACC.2013.6580036 [gefunden am 2013-08-14]**

EP 3 717 770 B1

**Beschreibung**

Die Erfindung betrifft ein Regelungssystem zur Regelung einer Turbine, eine Windturbine mit einem solchen Regelungssystem und ein Verfahren zur Regelung einer Turbine.

Lidar ist eine dem Fachmann bekannte Vermessungs-Technologie zur Bestimmung von Abständen durch Beleuchten eines Ziels mit einem Laserlicht. Lidar ist hierbei ein Akronym für "Light Detection And Ranging" und wurde ursprünglich als Portmanteau von "Licht" und "Radar" geschaffen. Lidar wird allgemein als Technologie verwendet, um hochauflösende Karten mit Anwendungen in Geodäsie, Geomatik, Archäologie, Geografie, Geologie, Geomorphologie, Seismologie, Forstwirtschaft, atmosphärische Physik, airbone laser swath mapping (ALSM) und Laserhöhenmessungen zu schaffen. Was als Lidar bekannt ist, wird manchmal einfach als Laserscanning oder 3D-Scannen, mit terrestrischen, luftgetragenen und mobilen Anwendungen bezeichnet.

Lidar verwendet ultraviolettes, sichtbares oder Nahinfrarotlicht, um Objekte abzubilden. Es kann auf einen breiten Bereich von Materialien abzielen, umfassend nicht-metallische Objekte, Felsen, Regen, chemische Verbindungen, Aerosole, Wolken und sogar einzelne Moleküle. Ein schmaler Laserstrahl kann physikalische Merkmale mit sehr hohen Auflösungen kartieren, zum Beispiel kann ein Flugzeug ein Gelände mit 30 cm Auflösung oder besser kartieren.

Lidar wurde für die atmosphärische Forschung und Meteorologie ausgiebig eingesetzt. Lidar Instrumente mit denen Flugzeuge und Satelliten ausgestattet sind, führen Vermessungen und Kartierungen durch, wobei ein aktuelles Beispiel das U.S. Geological Survey Experimental Advanced Airborne Forschungslidar ist. Die NASA hat Lidar als Schlüsseltechnologie für die Realisierung von sicheren autonomen Präzisionslandungen von zukünftigen Robotern und bemannten Mondlandungs-Fahrzeugen identifiziert.

Die in Lidar-Messungen verwendeten Wellenlängen variieren je nach Ziel von etwa 10 Mikrometern bis zu UV (ungefähr 250 nm). Typischerweise wird Licht durch Rückstreuung reflektiert. Verschiedene Typen der Streuung werden für verschiedene Lidar-Anwendungen verwendet, beispielsweise Rayleigh-Streuung, Mie-Streuung, Raman-Streuung und Fluoreszenz. Basierend auf verschiedenen Arten von Rückstreuungen, kann das Lidar dementsprechend als Rayleigh-Lidar, Mie-Lidar, Raman-Lidar, Na/ Fe/ K-Fluoreszenz-Lidar und so weiter genannt werden. Geeignete Kombinationen von Wellenlängen können eine ferngesteuerte Kartierung von atmosphärischen Inhalten erlauben, indem wellenlängenabhängige Änderungen der Intensität des zurückgegebenen Signals identifiziert werden.

Lidar-gestützte Regelungen haben sich zu einem wichtigen Forschungsthema im Windturbinenregelungsbereich entwickelt. Bei Erstfeldprüfungen war ein kollektiver Neigungsfeedforwardregler in der Lage, die Rotordrehzahländerung und die strukturellen Belastungen während des Volllastbetriebes bei verschiedenen Feldversuchen zu reduzieren. Bei Teillastbetrieb zeigt eine Lidar-unterstützte Drehmomentregelung nur einen geringen Nutzen auf Stromerzeugung während diese negativen Einfluss bei strukturellen Belastungen hat. Non-linear model predictive control (NMPC), wobei lediglich die kollektive Neigung (engl: pitch) verwendet wird, zeigt eine ähnliche Leistung zu kollektiven Neigungsfeedforwardreglern während des Volllastbetriebs, zeigt aber eine verbesserte Leistung im Übergang zwischen Teil- und Volllastbetrieb unter Verwendung des zusätzlichen Generatordrehmoments. Obwohl NMPC rechnerisch immer effektiver wird, ist es für den Turbinenhersteller weniger attraktiv, wenn der Feedbackregler ersetzt wird. Der flachheitsbasierte Ansatz ermöglicht die Berechnung der Regelungsaktion auf der Grundlage von Trajektorien der Rotorgeschwindigkeit bzw. -drehzahl und Turmbewegung und zeigt auch eine verbesserte Regelungsleistung im Übergangsbereich, ist aber schwer abzustimmen.

US 2017/167470 A1 beschreibt ein Verfahren zum Steuern einer Windkraftanlage umfasst das Empfangen von Signalen, die für entgegenkommende Windgeschwindigkeiten repräsentativ sind, die sich mindestens einem Teil einer Windkraftanlage nähern, das Empfangen von Hintergrundrauschen und Signalen, die für Signal-Rausch-Verhältnisse repräsentativ sind, die den Signalen entsprechen, die für die entgegenkommenden Windgeschwindigkeiten repräsentativ sind, ein Bestimmen eines Verfügbarkeits- und Atmosphärenrauschens in den Signalen basierend auf einem oder mehreren der Signal-Rausch-Verhältnisse, den Schaufelpositionen der Schaufeln der Windkraftanlage und der Gierposition einer Gondel der Windkraftanlage, ein Bestimmen eines Wind-Inkohärenz-Rauschens in den Signalen aufgrund einer Änderung der entgegenkommenden Windgeschwindigkeiten bei Annäherung an mindestens den Teil der Windkraftanlage, Bestimmen eines Netto-Messrauschens in den Signalen basierend auf dem Hintergrundrauschen, dem Verfügbarkeits- und Atmosphärenrauschen und dem Wind-Inkohärenzrauschen und Steuern der Windkraftanlage basierend auf mindestens den Signalen, die für die entgegenkommenden Windgeschwindigkeiten repräsentativ sind, und dem Netto-Messrauschens.

Aho Jacob et al.: "Optimal Trajectory Tracking Control for Wind Turbines During Operating Region Transitions" (2015 American Control Conference (ACC), IEEE, 17. Juni 2013, Seiten 1424-1429, XP032476119, ISSN: 0743-1619, DOI: 10.1109/ACC.2013.6580036) beschreibt die Verwendung von Vorschau-Windgeschwindigkeitsmessungen zum Planen, Optimieren und Verfolgen einer gewünschten Bahn der Windturbinenzustände und -Eingänge während Regionenübergängen zwischen unter-bewertetem und über-bewertetem Betrieb. Hierbei sollen die strukturellen Belastungen auf die Windturbinenteile mittels sanfteren Regionenübergängen reduziert werden. Die Vorschau-Windgeschwindigkeitsmessungen werden verwendet, um eine anfängliche gewünschte Bahn der Windturbine zu erzeugen. Diese Bahn wird optimiert durch Finden einer Regulierungsbahn, welche auf der Turbinenbahnmannigfalt liegt, welche nahe der gewünschten Bahn in einem L2 Sinn ist. Die Regulierungsbahn wird als Referenz für einen zeitich-veränderlichen linearen quadratischen Optimalregler verwendet.

WO 2017/149657 A1 beschreibt eine Starthilfevorrichtung für Windkraftanlagen umfasst: eine Blattdrehzahl-Berechnungseinheit, die die Blattdrehzahl berechnet, wenn ein Blatt einer Windkraftanlage Laserlicht durchläuft, das von einer Windmess-Lidarvorrichtung ausgegeben wird, die auf einer Windkraftanlagengondel der Windkraftanlage montiert ist; eine ankommender-Wind-Geschwindigkeitsberechnungseinheit, die auf der Grundlage der Windgeschwindigkeit in Sichtlinienrichtung eines Lasers, der von der Windmess-Lidarvorrichtung erfasst wurde, die Geschwindigkeit des ankommenden Windes berechnet; und eine Starthilfesteuereinheit, die auf der Basis der von der Blattdrehzahl-Berechnungseinheit berechneten Blattdrehzahl und der von der ankommender-Wind-Geschwindigkeitsberechnungseinheit berechneten Geschwindigkeit des ankommenden Windes, Starthilfe zur Erleichterung des Starts der Rotation des Blatts steuert.

Daher gibt es auf der Grundlage des aktuellen technologischen Standes eine Notwendigkeit, die Regelung der Drehzahl einer Windturbine zu verbessern und zwar im Übergang zwischen Teil - und Volllast die Energieausbeute zu erhöhen und die strukturellen Belastungen zu reduzieren. Die vorliegende Erfindung zielt insbesondere darauf ab, die Rotordrehzahlregelung zu verbessern, die strukturellen Belastungen zu reduzieren und die Energieausbeute im Übergang zu erhöhen.

Insbesondere sind Lidar-basierte Regelungen von Windenergieanlagen eine vielversprechende Technologie zur Lastreduktion von Windenergieanlagen. Hierbei werden Lidar-Rohdaten ("line-of-sight" Windgeschwindigkeit) verwendet, um eine rotor-effektive Windgeschwindigkeit zu schätzen, was als Windfeldrekonstruktion bezeichnet wird. Der Begriff der rotor-effektiven Windgeschwindigkeit ist auf dem Gebiet der Windturbinentechnologie bekannt und beispielsweise in der Doktorarbeit von Dr. David Schlipf, "Lidar-Assisted Control Concepts for Wind Turbines" (Universität Stuttgart, 2016) definiert. Hierbei ist die rotor-effektive Windgeschwindigkeit eine skalare Windgeschwindigkeit, welche einen gleichen oder vergleichbaren dynamischen Effekt für die Windturbine erzeugt wie ein nicht-einheitliches, turbulentes Windfeld (ein 3D Vektorenfeld, definiert auf der Rotorscheibe). Die rotor-effektive Windgeschwindigkeit kann hierbei als ein Durchschnitt über die Rotorscheibe, mit oder ohne Gewichtung, berechnet werden. Regler und Regelsysteme, die auf einer solchen Abschätzung bzw. Berechnung der rotor-effektiven Windgeschwindigkeit basieren, sind beispielsweise in der DE 10 2016 212 362 beschrieben, deren Inhalt hiermit in diese Anmeldung aufgenommen wird.

Hierbei ist die rotor-effektive Windgeschwindigkeit in Bezug auf Turbinen, welche auf Basis von Windkraft betrieben werden, definiert. Eine Übertragung der rotor-effektiven Windgeschwindigkeit auf Turbinen, die beispielsweise unter Wasser und auf Basis von Wasserströmungen betrieben werden, ist direkt möglich. Insbesondere werden Lidar-Rohdaten ("line-of-sight" Strömungsgeschwindigkeit) verwendet, um eine rotor-effektive Strömungsgeschwindigkeit zu schätzen, was als Strömungsfeldrekonstruktion bezeichnet wird. Der Begriff der rotor-effektiven Strömungsgeschwindigkeit wird hierbei analog zur rotor-effektiven Windgeschwindigkeit definiert. Hierbei ist die rotor-effektive Strömungsgeschwindigkeit eine skalare Strömungsgeschwindigkeit, welche einen gleichen oder vergleichbaren dynamischen Effekt für die Turbine erzeugt wie ein nicht-einheitliches turbulentes Strömungsfeldfeld (ein 3D Vektorenfeld, definiert auf der Rotorscheibe). Die rotor-effektive Strömungsgeschwindigkeit kann hierbei als ein Durchschnitt über die Rotorscheibe, mit oder ohne Gewichtung, berechnet werden.

Im Rahmen der vorliegenden Beschreibung wird der Übersichtlichkeit halber die rotor-effektive Windgeschwindigkeit verwendet, bzw. die Erfindung auf Basis einer Windturbine beschrieben. Dies ist jedoch explizit nicht als Beschränkung zu interpretieren. Die Erfindung kann insbesondere auf Regelsysteme für Rotoren und Turbinen in beliebigen Medien angewendet werden.

In solchen Systemen, die auf einer Berechnung bzw. Abschätzung der rotor-effektiven Windgeschwindigkeit beruhen, wurde festgestellt, dass unter bestimmten Bedingungen des Windfeldes und der Turbine eine Lasterhöhung für die Turbine eintritt.

Es ist daher die Aufgabe der vorliegenden Erfindung, ein Regelsystem zur Regelung einer Turbine bereitzustellen, um die Rotordrehzahlregelung zu verbessern und die strukturellen Belastungen zu reduzieren.

Diese Aufgabe wird durch ein Regelsystem, eine Windturbine und ein Verfahren zur Regelung einer Turbine gemäß den unabhängigen Ansprüchen gelöst. Bevorzugte Ausführungsformen bilden den Gegenstand der abhängigen Ansprüche.

Ein Aspekt betrifft ein Regelungssystem für eine Turbine, umfassend eine Regelungseinheit, wobei die Regelungseinheit ausgelegt ist, basierend auf mindestens einem bestimmten Parameter eines Strömungsfeldes stromaufwärts von der Turbine, ein Regelungssignal zur Regelung der Turbine zu erzeugen, mindestens eine Messeinheit, wobei die mindestens eine Messeinheit ausgelegt ist, mindestens einen Messwert in Bezug auf den mindestens einen Parameter des Strömungsfeldes basierend auf mindestens einem Messsignal zu messen, wobei jedes Messsignal an jeweils einen Messpunkt des Strömungsfeldes bzw. des Windfeldes aussendbar ist bzw. wobei die mindestens eine Messeinheit ausgelegt ist, jedes Messsignal an jeweils einen Messpunkt des Strömungsfeldes bzw. des Windfeldes auszusenden, mindestens eine Bestimmungseinheit, wobei die mindestens eine Bestimmungseinheit ausgelegt ist, den mindestens einen Parameter des Strömungsfeldes basierend auf dem mindestens einen gemessenen Messwert zu bestimmen, wobei die mindestens eine Bestimmungseinheit ausgelegt ist, einen fehlerhaften Messwert, insbesondere aufgrund einer Blockierung mindestens eines Messsignals zwischen der mindestens einen Messeinheit und dem jeweiligen Messpunkt, insbesondere durch ein Rotorblatt der Turbine, festzustellen und eine daraus entstehende fehlerhafte Bestimmung des mindestens einen Parameters des Strömungsfeldes zu kompensieren.

Die mindestens eine Regelungseinheit kann hierbei als ein elektronisches Bauteil ausgebildet sein, und kann mindestens einen Prozessor umfassen. Insbesondere kann die mindestens eine Regelungseinheit mit der Turbine elektronisch verbunden sein, um diese über das Regelungssignal zu steuern bzw. regeln. Hierbei kann die Regelungseinheit physisch über einen Datenleiter oder über eine drahtlose Verbindung mit der Turbine verbunden sein.

Der mindestens eine Parameter des Strömungsfeldes kann ein physischer Parameter des Strömungsfeldes sein, wobei der mindestens eine Parameter des Strömungsfeldes eine rotor-effektive Windgeschwindigkeit und/oder eine Windscherung und/oder eine Windrichtung umfasst. Der mindestens eine Parameter ist jedoch nicht auf diese Größen beschränkt, sondern kann ein beliebiger physikalischer Parameter des Strömungsfeldes sein, wobei der mindestens eine Parameter auch ein mehrdimensionaler Parameter sein kann. Das Strömungsfeld beschreibt hierbei Flüsse bzw. Strömungen, welche materielle oder andere Eigenschaften, wie beispielsweise Kraftwirkungen (Wechselwirkungen) innerhalb eines räumlichen Gebietes transportieren.

Die Turbine kann hierbei insbesondere eine Windturbine sein, wobei das Strömungsfeld ein Windfeld ist. Die Turbine ist jedoch, wie oben erläutert, nicht auf eine Ausbildung als Windturbine beschränkt. Insbesondere kann die Turbine beispielsweise als ein Strömungskraftwerk zumindest teilweise unter Wasser ausgebildet sein, und/oder durch ein Strömungsfeld eines beliebigen Mediums antreibbar ausgebildet sein. Die Turbine kann insbesondere drei Rotorblätter aufweisen, wobei jedoch auch Turbinen mit einem, zwei oder mehr als drei Rotorblättern möglich sind.

Die mindestens eine Messeinheit ist ausgelegt, mindestens einen Messwert in Bezug auf den mindestens einen Parameter des Strömungsfeldes basierend auf mindestens einem Messsignal zu messen. Jedes Messsignal ist an jeweils einen Messpunkt des Strömungsfeldes bzw. des Windfeldes aussendbar bzw. die mindestens eine Messeinheit ist ausgelegt, jedes Messsignal an jeweils einen Messpunkt des Strömungsfeldes bzw. des Windfeldes auszusenden. Mit anderen Worten kann die mindestens eine Messeinheit insbesondere ausgelegt sein, mindestens ein Messsignal an jeweils einen Messpunkt des Strömungsfeldes bzw. des Windfeldes auszusenden, um mindestens einen Messwert in Bezug auf den mindestens einen Parameter an dem jeweiligen Messpunkt zu messen. Insbesondere kann die mindestens eine Messeinheit ausgelegt sein, zur Messung eines Messwertes an einem Messpunkt genau ein Messsignal an den jeweiligen Messpunkt des Strömungsfeldes bzw. des Windfeldes auszusenden, wodurch insbesondere die Verwendung von kosteneffizienten und/oder einfachen Messeinheiten ermöglicht wird. Ferner kann der mindestens eine Messwert insbesondere eine Strömungsgeschwindigkeit des Strömungsfeldes bzw. eine (z.B. line-of-sight) Windgeschwindigkeit des Windfeldes in dem jeweiligen Messpunkt sein.

Die mindestens eine Messeinheit kann insbesondere mindestens eine Emissionseinrichtung aufweisen, welche ausgelegt ist, das mindestens eine Messsignal zu emittieren bzw. auszusenden. Das mindestens eine Messsignal kann hierbei insbesondere eine elektromagnetische Welle und/oder eine akustische Welle sein. Die mindestens eine Messeinheit kann insbesondere mindestens eine Empfangseinrichtung aufweisen, welche ausgelegt ist, Reflexionen des mindestens einen Messsignals zu empfangen und in ein Datensignal umzuwandeln.

Die mindestens eine Messeinheit kann insbesondere ausgelegt sein, in jedem Messpunkt Messwerte in Bezug auf den mindestens einen Parameter sequentiell bzw. zeitlich aufeinanderfolgend, beispielsweise in konstanten Zeitabständen zu messen. In anderen Worten, die mindestens eine Messeinheit kann insbesondere ausgelegt sein, in jedem Messpunkt sequentiell bzw. zeitlich aufeinanderfolgend Messwerte in Bezug auf den mindestens einen Parameter mit einer Punkt-Messfrequenz zu messen. Hierbei kann insbesondere die jeweilige Punkt-Messfrequenz dynamisch basierend auf dem bestimmten Parameter des Strömungsfeldes und/oder auf mindestens einem vorherigen Messwert des jeweiligen Messpunktes angepasst werden. Somit kann insbesondere die Bestimmung des Parameters dynamisch an die situationsbedingten bzw. umweltbedingten Umstände angepasst werden, beispielsweise durch eine erhöhte Messfrequenz bei erhöhter Strömungsgeschwindigkeit des Strömungsfeldes. Ein vorheriger Messwert eines Messpunktes kann insbesondere einem Messwert entsprechen, welcher von der mindestens einen Messeinheit zu einem vorherigen Zeitpunkt an dem jeweiligen Messpunkt gemessen wurde. Ein nächster Messwert eines Messpunktes kann insbesondere einem Messwert entsprechen, welcher von der mindestens einen Messeinheit zu einem nächsten Zeitpunkt an dem jeweiligen Messpunkt gemessen wurde.

Ferner kann die mindestens eine Messeinheit ausgelegt sein, in einem Messzyklus mindestens einen Messwert in Bezug auf den mindestens einen Parameter sequentiell bzw. zeitlich aufeinanderfolgend an jedem Messpunkt zu messen. Die mindestens eine Messeinheit kann insbesondere ausgelegt sein, mehrere Messzyklen hintereinander bzw. sequentiell bzw. zeitlich aufeinanderfolgend durchzuführen.

Die mindestens eine Bestimmungseinheit kann hierbei als ein elektronisches Bauteil ausgebildet sein, und mindestens einen Prozessor umfassen. Insbesondere kann die mindestens eine Bestimmungseinheit mit der mindestens einen Messeinheit elektronisch verbunden sein, um mindestens einen Messwert der Messeinrichtung zu empfangen.

Hierbei kann die mindestens eine Bestimmungseinheit physisch über einen Datenleiter oder über eine drahtlose Verbindung mit der mindestens einen Messeinheit verbunden sein. Insbesondere kann die mindestens eine Bestimmungseinheit mit der mindestens einen Regelungseinheit elektronisch verbunden sein, um den mindestens einen bestimmten Parameter des Strömungsfeldes an die mindestens eine Regelungseinheit zu übermitteln. Hierbei kann die mindestens eine Bestimmungseinheit physisch über einen Datenleiter oder über eine drahtlose Verbindung mit der mindestens einen Regelungseinheit verbunden sein.

Die mindestens eine Bestimmungseinheit ist ferner ausgelegt, einen fehlerhaften Messwert, insbesondere aufgrund einer Blockierung mindestens eines Messsignals zwischen der mindestens einen Messeinheit und dem jeweiligen Messpunkt, insbesondere durch ein Rotorblatt der Turbine, festzustellen. Hierbei kann die mindestens eine Bestimmungseinheit vorzugsweise ausgelegt sein, periodische fehlerhafte Messwerte, wie aufgrund von periodischen Blockierungen, beispielsweise Blockierungen aufgrund einer Rotation der Rotorblätter der Turbine, von aperiodischen fehlerhaften Messwerten, wie aufgrund von aperiodischen Blockierungen, beispielsweise aufgrund von vorbeifliegenden Tieren, zu unterscheiden. Hierbei kann die mindestens eine Bestimmungseinheit ausgelegt sein, beispielsweise ein Signal-Rausch-Verhältnis eines reflektierten, blockierten Messsignals zu analysieren und/oder die Entfernung der Blockierung von der mindestens eine Messeinheit zu messen. Insbesondere ist die mindestens eine Bestimmungseinheit ausgelegt, bei Feststellung einer solchen Blockierung, die Bestimmung des Parameters basierend auf den Messwerten zu kompensieren, um die Bildung von Resonanzen in dem bestimmten Parameter bzw. in dem Regelungssignal basierend auf dem bestimmten Parameter zu vermeiden bzw. zu verhindern. Hierzu ist die mindestens eine Bestimmungseinheit insbesondere ausgelegt, mindestens ein Rekonstruktionsverfahren zur Ersetzung eines aufgrund der Blockierung fehlerhaften Messwerts, wie unten beschrieben, anzuwenden. Mit anderen Worten kann die mindestens eine Bestimmungseinheit insbesondere ausgelegt sein, eine aus dem fehlerhaften Messwert entstehende fehlerhafte Bestimmung des mindestens einen Parameters zu kompensieren, indem die mindestens eine Bestimmungseinheit ausgelegt ist, den fehlerhaften Messwert durch einen Ersatzmesswert zu ersetzen. Die mindestens eine Bestimmungseinheit kann hierzu insbesondere ausgelegt sein, den Ersatzmesswert mittels mindestens eines Rekonstruktionsverfahrens, beispielsweise wie weiter unten beschrieben, zu ermitteln. Insbesondere kann die mindestens eine Bestimmungseinheit ausgelegt sein, dynamisch, basierend auf vorherigen Messwerten und/oder vorherigen bestimmten Parametern und/oder lokalen Strömungsbedingungen, eines der unten beschriebenen Rekonstruktionsverfahren zur Ersetzung eines aufgrund der Blockierung fehlerhaften Messwerts zu wählen und anzuwenden. Insbesondere kann die mindestens eine Bestimmungseinheit ausgelegt sein, eines oder mehrere der unten beschriebenen Rekonstruktionsverfahren zur Ersetzung eines aufgrund der Blockierung fehlerhaften Messwerts anzuwenden. Somit kann mittels einer solchen Kompensation der Bestimmung des mindestens einen Parameters des Strömungsfeldes eine Interferenz zwischen einer Rotordrehfrequenz der Turbine und einer Messfrequenz der mindestens einen Messeinheit, insbesondere einer Lidar-Messfrequenz, vermieden werden, wodurch eine korrekte Berechnung bzw. Bestimmung bzw. Schätzung des mindestens einen Parameters des Strömungsfeldes ermöglicht wird.

Die Erfinder haben insbesondere in Rahmen der Suche nach den Gründen der Lasterhöhung, wie oben beschrieben, festgestellt, dass diese auf eine Blockierung bzw. Abschattung (im Rahmen dieser Beschreibung wird auch Blattabschattung austauschbar und äquivalent verwendet) von für die Berechnung bzw. Abschätzung der rotor-effektiven Windgeschwindigkeit benutzten Messstrahlen, insbesondere durch die Rotorblätter der Turbine, zurückzuführen ist. Erst durch eine erfindungsgemäße, dynamische Betrachtung der Messsignale bzw. der gemessenen Messwerte fällt die dynamische Interferenz der (insbesondere z.B. Lidar-) Messungen mit der Rotordrehung auf. Bisher wurde hierbei insbesondere nicht erkannt, dass es hierdurch auch zu Anregungen von Turmschwingungen kommen kann. Hingegen wurde bisher das Problem der "blade blockage" bzw. die Abschattung der Messstrahlen durch die Rotorblätter, wie oben beschrieben, lediglich in der Analyse um die Verfügbarkeit von Lidar-Messgeräte benannt.

Bei Lidar-Systemen auf der Gondel von Windenergieanlagen werden abhängig von Messfrequenz und Rotordrehzahl einzelne Lidar-Strahlen durch die Rotorblätter blockiert. Dies wird von Lidar-Systemen erkannt und die Messdaten werden herkömmlich in Windfeldrekonstruktionen ignoriert. Dabei hat sich im Zuge dieser Erfindung gezeigt, dass die Blattabschattung zusammen mit solchen herkömmlichen Windfeldrekonstruktionen zu Resonanzen im Signal der rotor-effektiven Windgeschwindigkeit führt. Diese Resonanzen liegen in einem für die Regelung kritischen Frequenzbereich und können daher, falls ein daraus erzeugtes Regelungssignal zur Regelung der Turbine verwendet wird, zu Lasterhöhungen für die Turbine führen.

Die rotor-effektive Windgeschwindigkeit $v_{0L,jk}$ für jede Messebene $j$ und Messzyklus $k$ wird aktuell als gleitender Mittelwert über die korrigierten Messwerte folgendermaßen bestimmt:

$$v_{0L,jk} = \frac{1}{n_P} \sum_{i=1}^{n_P} \frac{v_{ijk}}{x_i}. \qquad (1)$$

Hier ist $np$ die Anzahl der Messpunkte pro Messzyklus, $x_i$ ein Korrekturwert abhängig von der Messkonfiguration,

$v_{ijk}$ die line-of-sight Windgeschwindigkeit (Messwert) vom Messpunkt $i$, Messebene $j$ und Messzyklus $k$. Im nächsten Zeitschritt entfällt der älteste Messwert, und der neueste Messwert wird hinzugefügt, wonach die Windfeldrekonstruktion für die aktuellsten $np$ Messpunkte wiederholt wird.

Kommt zum Beispiel ein Messsystem mit vier Lidar-Strahlen, wie bei aktuellen kommerziellen Geräten, zum Einsatz, wird nach dem ersten Messzyklus für jede Messebene über die Werte $(v_{1j1}; v_{2j1}; v_{3j1}; v_{4j1})$ gemittelt. Wird im nächsten Zeitschritt (Beginn zweiter Messzyklus) wieder in Punkt 1 gemessen, entfällt $v_{1j1}$ und wird durch den neuen Messwert $v_{1j2}$ ersetzt. Also wird über $(v_{1j2}; v_{2j1}; v_{3j1}; v_{4j1})$ gemittelt.

Falls nun ein oder mehrere Messwerte während eines Messzyklus durch die Blattabschattung entfallen, wird üblicherweise über die verbleibenden Messpunkte gemittelt. Wird in dem obigen Beispiel nun der zweite Messpunkt im zweiten Messzyklus blockiert bzw. abgeschattet, wird nun über die drei Messungen $(v_{1j2}; v_{3j1}; v_{4j1})$ gemittelt. Ist der Messwert im dritten Messpunkt wieder verfügbar, wird über $(v_{1j2}; v_{3j2}; v_{4j1})$ gemittelt. Tabelle 1 zeigt exemplarisch die weiteren Schritte.

Tabelle 1: Beispiel für das bisherige Verfahren im Falle eine vierstrahligen Lidar-Systems.

| Messpunkt $i$ | Messzyklus $k$ | Blattabschattung | Anzahl $n_P$ | Punkte | Schätzung $v_{0L}$ [m/s] |
|---|---|---|---|---|---|
| ... | ... | ... | ... | ... | ... |
| 4 | 1 | nein | 4 | $v_{1j1}, v_{2j1}, v_{3j1}, v_{4j1}$ | 16.0 |
| 1 | 2 | nein | 4 | $v_{1j2}, v_{2j1}, v_{3j1}, v_{4j1}$ | 16.0 |
| 2 | 2 | ja | 3 | $v_{1j2}, v_{3j1}, v_{4j1}$ | 15.6 |
| 3 | 2 | nein | 3 | $v_{1j2}, v_{3j2}, v_{4j1}$ | 15.6 |
| 4 | 2 | nein | 3 | $v_{1j2}, v_{3j2}, v_{4j2}$ | 15.6 |
| 1 | 3 | nein | 3 | $v_{1j3}, v_{3j2}, v_{4j2}$ | 15.6 |
| 2 | 3 | nein | 4 | $v_{1j3}, v_{2j3}, v_{3j2}, v_{4j2}$ | 16.0 |
| 3 | 3 | nein | 4 | $v_{1j3}, v_{2j3}, v_{3j3}, v_{4j2}$ | 16.0 |
| 4 | 3 | ja | 3 | $v_{1j3}, v_{2j3}, v_{3j3}$ | 16.4 |
| ... | ... | ... | ... | ... | ... |

Unter ungünstigen atmosphärischen Bedingungen, beispielsweise bei einer Windscherung kommt es jedoch zu periodischen Schwankungen. Misst ein vierstrahliges Gerät zum Beispiel in den Punkten von Tabelle 2 (siehe unten) und gibt es eine vertikale lineare Windscherung von 0.04 (m/s)/m, sind die Messwerte in den beiden oberen Punkten 17.2 m/s und die Messwerte in den beiden unteren Punkten 14.8 m/s. Entfällt wie zuvor jede sechste Messung, zum Beispiel insbesondere durch die Blattabschattung, ergibt sich eine Resonanz bei 1/3 Hz.

Tabelle 2: Beispiel Messpunkte für vierstrahliges Lidar-System.

| Messpunkt $i$ | Zeit [s] | longitudinal $x$ [m] | horizontal $y$ [m] | vertikal $z$ [m] | korrigierter Messwert $\frac{v_{ijk}}{x_i}$ [m/s] |
|---|---|---|---|---|---|
| 1 | 0.25 | 100 | 30 | 30 | 17.2 |
| 2 | 0.50 | 100 | -30 | 30 | 17.2 |
| 3 | 0.75 | 100 | -30 | -30 | 14.8 |
| 4 | 1.00 | 100 | 30 | -30 | 14.8 |

Im Zuge dieser Erfindung wurde erkannt, dass die Resonanz durch ein periodisches Fehlen von Messdaten und den unterschiedlichen Mittelwerten der Messpunkte entsteht. Vorteilhafterweise ermöglicht ein Regelungssystem gemäß Anspruch 1 eine Regelung der Turbine ohne dass ein solches periodisches Fehlen von Messdaten auftritt, und ermöglicht somit die Verhinderung eines Auftretens der oben beschriebenen Resonanzen.

Insbesondere kann die mindestens eine Bestimmungseinheit ausgelegt sein, basierend auf dem mindestens einen Messsignal eine Fehlerhaftigkeit eines Messwerts, insbesondere aufgrund der Blockierung des jeweiligen Messsignals zwischen der mindestens einen Messeinheit und dem jeweiligen Messpunkt festzustellen. Vorzugsweise kann die mindestens eine Bestimmungseinheit ausgelegt sein, eine Beschaffenheit, beispielsweise eine Periodizität oder eine Reflektivität, der Blockierung festzustellen.

Vorzugsweise kann die mindestens eine Messeinheit ausgelegt sein, mindestens ein Qualitätssignal, insbesondere ein Signal-Rausch-Verhältnis, parallel zu dem mindestens einen Messsignal und/oder auszugebenen. Das mindestens eine Qualitätssignal kann hierbei ein elektromagnetisches Signal und/oder ein akustisches Signal sein. Die mindestens eine Bestimmungseinheit kann ausgelegt sein, basierend auf dem mindestens einen Qualitätssignals die Fehlerhaftigkeit des Messwerts, insbesondere aufgrund der Blockierung des jeweiligen Messsignals zwischen der mindestens einen Messeinheit und dem jeweiligen Messpunkt festzustellen. Vorzugsweise kann die mindestens eine Bestimmungseinheit ausgelegt sein, eine Beschaffenheit, beispielsweise eine Periodizität oder eine Reflektivität, der Blockierung basierend auf dem mindestens einen Qualitätssignal festzustellen.

Vorzugsweise kann die mindestens eine Regelungseinheit die mindestens eine Bestimmungseinheit umfassen. Hierdurch kann die notwendige Rechenkapazität zentral für die Funktion der mindestens einen Bestimmungseinheit und der mindestens einen Regelungseinheit vorgesehen werden. Alternativ kann die mindestens eine Messeinheit vorzugsweise die mindestens eine Bestimmungseinheit umfassen. Alternativ können die mindestens eine Regelungseinheit und die mindestens eine Messeinheit jeweils einen Teil der mindestens einen Bestimmungseinheit umfassen. Beispielsweise kann ein Teil der mindestens einen Bestimmungseinheit, welcher fehlerhafte Messwerte kompensiert, von der mindestens eine Messeinheit umfasst sein, wodurch eine Übermittlung eines fehlerhaften Messwerts nicht notwendig ist, während ein Teil der mindestens einen Bestimmungseinheit, welcher den mindestens einen Parameter basierend auf den Messwerten bestimmt, von der mindestens einen Regelungseinheit umfasst sein kann. Hierdurch kann eine Funktionsteilung des Regelsystems ermöglich werden. Vorzugsweise können die Funktionen der mindestens einen Bestimmungseinheit dynamisch von dem Regelungssystem auf die mindestens eine Messeinheit und die mindestens eine Regelungseinheit, beispielsweise aufgrund von aktuellen Auslastungen der jeweiligen Einheiten, verteilt werden.

Vorzugsweise ist die mindestens eine Messeinheit als ein Lidar-System ausgebildet. Hierbei kann das mindestens eine Messsignal des Lidar-Systems mindestens einen Messstrahl, bevorzugt vier Messstrahlen umfassen.

Vorzugsweise ist die mindestens eine Bestimmungseinheit ausgelegt, den mindestens einen Parameter des Strömungsfeldes basierend auf einer Menge von Messpunkten, insbesondere vorbestimmten Messpunkten zu bestimmen. Hierbei kann die Menge der Messpunkte alle Messpunkte, an welchen die mindestens eine Messeinheit Messwerte misst, oder eine Teilmenge der Messpunkte, an welchen die mindestens eine Messeinheit Messwerte misst, umfassen.

Vorzugsweise ist die mindestens eine Bestimmungseinheit ausgelegt, die fehlerhafte Bestimmung des mindestens einen Parameters des Strömungsfeldes durch Ersetzen eines fehlerhaften Messwerts durch einen Messwert eines anderen Messpunkts der Menge von Messpunkten, bevorzugt durch einen Messwert eines dem jeweiligen fehlerhaften Messpunkt nächstliegenden anderen Messpunkts der Menge von Messpunkten zu kompensieren. Insbesondere kann durch ein solches direktes Ersetzen des fehlerhaften Messwerts ein schnelles und effizientes Ersetzen des fehlerhaften Messwerts durchgeführt werden. Insbesondere kann der nächstliegende andere Messpunkt ein Messpunkt mit dem geringsten räumlichen Abstand und/oder ein Messpunkt mit einem zum Zeitpunkt einer Messung des fehlerhaften Messpunkts geringsten zeitlichen Abstand sein.

Vorzugsweise ist die mindestens eine Bestimmungseinheit ausgelegt, die fehlerhafte Bestimmung des mindestens einen Parameters des Strömungsfeldes durch Ersetzen eines fehlerhaften Messwerts durch einen geschätzten Messwert basierend auf Messwerten von mindestens zwei anderen Messpunkten der Menge von Messpunkten zu kompensieren. Hierbei kann die mindestens eine Bestimmungseinheit einen Mittelwert der mindestens zwei anderen Messwerte bilden. Die mindestens eine Bestimmungseinheit ist hierbei jedoch nicht auf eine solche Ausbildung beschränkt. Vielmehr kann die mindestens eine Bestimmungseinheit den geschätzten Messwert durch eine beliebige mathematische Berechnung basierend auf den mindestens zwei anderen Messwerten berechnen. Bei einem Regelungssystem mit vier separaten Messpunkten kann die mindestens eine Bestimmungseinheit beispielsweise den geschätzten Wert derart berechnen, dass eine Summe der Messwerte der Messpunkte entlang einer ersten Diagonalen eines Vierecks, dessen vier Ecken den vier Messpunkten entsprechen, gleich einer Summe der Messwerte der Messpunkte entlang einer zweiten Diagonalen des Vierecks ist.

Vorzugsweise ist die mindestens eine Bestimmungseinheit ausgelegt, die fehlerhafte Bestimmung des mindestens einen Parameters des Strömungsfeldes durch Ersetzen eines fehlerhaften Messwerts durch einen vorherigen, insbesondere direkt vorherigen Messwert des jeweils einen Messpunkts zu kompensieren. Der vorherige Messwert des jeweiligen Messpunkts kann hierbei insbesondere der zeitlich vorherige bzw. der letzte Messwert des jeweiligen Messpunkts sein. Insbesondere ergibt sich hierbei eine gute Windfeldrekonstruktion, wie unten in Tabelle 3 dargestellt, wobei Tabelle 3 die Anwendung einer solchen Windfeldrekonstruktion auf die Werte aus Tabelle 1 darstellt.

Tabelle 3: Beispiel für das verbesserte Verfahren im Falle eine vierstrahliges Lidar-Systems.

| Messpunkt $i$ | Messzyklus $k$ | Blattabschattung | Anzahl $n_P$ | Punkte | Schätzung $v_{0L}$ [m/s] |
|---|---|---|---|---|---|
| ... | ... | ... | ... | ... | ... |
| 4 | 1 | nein | 4 | $v_{1j2}$, $v_{2j1}$, $v_{3j1}$, $v_{4j1}$ | 16.0 |
| 1 | 2 | nein | 4 | $v_{1j2}$, $v_{2j1}$, $v_{3j1}$, $v_{4j1}$, | 16.0 |
| 2 | 2 | ja | 4 | $v_{1j2}$, $v_{2j1}$, $v_{3j1}$, $v_{4j1}$ | 16.0 |
| 3 | 2 | nein | 4 | $v_{1j2}$, $v_{2j1}$, $v_{3j2}$, $v_{4j1}$ | 16.0 |

(fortgesetzt)

| Messpunkt $i$ | Messzyklus $k$ | Blattabschattung | Anzahl $n_P$ | Punkte | Schätzung $v_{0L}$ [m/s] |
|---|---|---|---|---|---|
| 4 | 2 | nein | 4 | $v_{1j2}, v_{2j1}, v_{3j2}, v_{4j2}$ | 16.0 |
| 1 | 3 | nein | 4 | $v_{1j3}, v_{2j1}, v_{3j2}, v_{4j2}$ | 16.0 |
| 2 | 3 | nein | 4 | $v_{1j3}, v_{2j3}, v_{3j2}, v_{4j2}$ | 16.0 |
| 3 | 3 | nein | 4 | $v_{1j3}, v_{2j3}, v_{3j3}, v_{4j2}$ | 16.0 |
| 4 | 3 | ja | 4 | $v_{1j3}, v_{2j3}, v_{3j3}, v_{4j2}$ | 16.0 |
| ... | ... | ... | ... | ... | ... |

Insbesondere kann die mindestens eine Messeinheit und/oder die mindestens eine Regelungseinheit und/oder die mindestens eine Bestimmungseinheit mindestens ein Speicherelement umfassen, welches ausgelegt ist, mindestens einen vorherigen, insbesondere zeitlich vorherigen Messwert jedes Messpunktes abrufbar zu speichern. Vorzugsweise ist das mindestens eine Speicherelement ausgelegt, mindestens drei vorherige, insbesondere zeitlich vorherige Messwerte jedes Messpunktes abrufbar zu speichern.

Vorzugsweise ist die mindestens eine Bestimmungseinheit ausgelegt, die fehlerhafte Bestimmung des mindestens einen Parameters des Strömungsfeldes durch Ersetzen eines fehlerhaften Messwerts durch einen interpolierten, insbesondere linear interpolierten Messwert basierend auf mindestens zwei vorherigen Messwerten des jeweils einen Messpunkts zu kompensieren. Die mindestens zwei, vorzugsweise mindestens drei vorherigen Messwerte des jeweiligen Messpunkts können hierbei direkt nach Feststellung der Blockierung aus beispielsweise dem mindestens einen Speicherelement abgerufen werden. Während eine lineare Interpolation ein effizientes Ersetzen eines fehlerhaften Messwerts ermöglicht, können auch andere Interpolationen, beispielsweise eine Spline-Interpolation verwendet werden. Insbesondere ist die mindestens eine Bestimmungseinheit nicht auf eine Interpolationsart beschränkt, sondern kann ausgebildet sein, eine beliebige Interpolationsart zu verwenden.

Vorzugsweise ist die mindestens eine Bestimmungseinheit ausgelegt, die fehlerhafte Bestimmung des mindestens einen Parameters des Strömungsfeldes durch Ersetzen eines fehlerhaften Messwerts durch einen interpolierten, insbesondere linear interpolierten Messwert basierend auf mindestens einem vorherigen und einem nächsten Messwert des jeweils einen Messpunkts zu kompensieren. Durch eine solche Interpolation basierend auf einem vorherigen und einen nachfolgenden bzw. nächsten Messwert eines Messpunkts, kann ein effizientes Ersetzen des fehlerhaften Messwerts ohne Erzeugung von nachfolgenden starken Schwankungen des Messwerts des Messpunkts ermöglicht werden.

Vorzugsweise umfasst die Regelungseinheit einen Feedbackregler, wobei der Feedbackregler mindestens ein Feedbackregelsignal zur Regelung der Turbine basierend auf Messsignalen der Turbine, insbesondere einer Rotordrehzahl der Turbine und/oder einer Generatordrehzahl der Turbine erzeugt. Vorzugsweise umfasst die Regelungseinheit einen Feedforwardregler, wobei der Feedforwardregler mindestens ein Feedforwardregelsignal zur Regelung der Turbine basierend auf mindestens dem mindestens einen bestimmten Parameter des Strömungsfeldes erzeugt.

Vorzugsweise ist die mindestens eine Bestimmungseinheit ferner ausgelegt, eine elektromagnetische Interferenz und/oder eine Schwingung der Turbine und/oder eine Schwingung einer Halterung der Messeinheit festzustellen und eine daraus entstehende fehlerhafte Bestimmung des mindestens einen Parameters des Strömungsfeldes zu kompensieren. Insbesondere können eine elektromagnetische Interferenz und/oder eine Schwingung der Turbine und/oder eine Schwingung einer Halterung der Messeinheit dazu führen, dass die Messeinheit, insbesondere periodisch, einen Messwert nicht an dem vorgeschriebenen Messpunkt misst, wodurch ein fehlerhafter Messwert des jeweiligen Messpunkts gemessen wird. Die mindestens eine Bestimmungseinheit kann hierbei insbesondere ausgelegt sein, einen solchen fehlerhaften Messwert durch einen Ersatzmesswert zu ersetzen, wobei der Ersatzmesswert insbesondere mittels mindestens eines der oben beschriebenen Rekonstruktionsverfahren zu ermitteln. Das Regelungssystem kann hierbei insbesondere mindestens einen elektromagnetischen Sensor und/oder mindestens einen Bewegungssensor und/oder mindestens ein Gyroskopelement aufweisen.

Somit baut die hierin offenbarte Lösung insbesondere auf einem Verständnis des Zusammenhangs zwischen räumlicher und zeitlicher Auflösung von (insbesondere Lidar-) Messungen und auf einem Verständnis des Zusammenspiels von Abschattungen, Scheerung, und Datenverarbeitung, sowie der Auswirkung, beispielsweise durch Anregungen von Turmschwingungen auf insbesondere Lidar-basierte Regelungen auf, wodurch ein Regelsystem zur Regelung einer Turbine bereitgestellt wird, um die Rotordrehzahlregelung zu verbessern und die strukturellen Belastungen zu reduzieren.

Ein weiterer Vorteil der vorliegenden Offenbarung ist, dass hierdurch zudem die Verwendung bzw. der Einsatz von Kerbfiltern/Notchfiltern beim Betrieb der Turbine bzw. bei Online-Anwendungen vermieden werden kann, wobei Kerbfilter/Notchfilter lediglich potentiell in der Lage sind, das Problem zu verringern, jedoch nicht zu beheben. Insbesondere bewirken solche Kerbfilter/Notchfilter jedoch einen zusätzlichen, ungewünschten Phasenversatz des Signals bzw. des Regelungssignals und/oder können dazu führen, dass das Signal bzw. das Regelungssignal zu spät für die Regelung der Turbine ist.p

Ein weiterer Aspekt betrifft eine Windturbine umfassend ein Regelungssystem und mindestens ein Rotorblatt. Das Regelungssystem kann hierbei eine beliebige Kombination der hierin beschriebenen Merkmale aufweisen.

Ein weiterer Aspekt betrifft ein Verfahren zur Regelung einer Turbine, umfassend Aussenden mindestens eines Messsignals von mindestens einer Messeinheit an jeweils einen Messpunkt eines Strömungsfeldes stromaufwärts von der Turbine, Messen, insbesondere in dem jeweiligen Messpunkt, mindestens eines Messwerts in Bezug auf den mindestens einen Parameter des Strömungsfeldes basierend auf dem mindestens einen Messsignal, Feststellen eines fehlerhaften Messwerts, insbesondere aufgrund einer Blockierung mindestens eines Messsignals zwischen der mindestens einen Messeinheit und dem jeweiligen Messpunkt, insbesondere durch ein Rotorblatt der Turbine, Bestimmen des mindestens einen Parameters des Strömungsfeldes basierend auf dem mindestens einen gemessenen Messwert, wobei eine fehlerhafte Bestimmung des mindestens einen Parameters des Strömungsfeldes kompensiert wird und Regeln der Turbine basierend auf dem mindestens einen Parameter eines Strömungsfeldes.

Die Turbine kann hierbei insbesondere eine Windturbine sein, wobei das Strömungsfeld ein Windfeld ist. Das Verfahren ist jedoch, wie oben erläutert, nicht auf eine Anwendung auf eine Windturbine beschränkt. Insbesondere kann die Turbine beispielsweise als ein Strömungskraftwerk zumindest teilweise unter Wasser ausgebildet sein, und/oder durch ein Strömungsfeld eines beliebigen Mediums antreibbar ausgebildet sein. Das Verfahren kann insbesondere für Turbinen mit drei Rotorblättern angewendet werden, wobei jedoch auch Turbinen mit einem, zwei oder mehr als drei Rotorblättern möglich sind.

Der mindestens eine Parameter des Strömungsfeldes kann ein physischer Parameter des Strömungsfeldes sein, wobei der mindestens eine Parameter des Strömungsfeldes eine rotor-effektive Windgeschwindigkeit und/oder eine Windscherung und/oder Windrichtung umfasst. Der mindestens eine Parameter ist jedoch nicht auf diese Größen beschränkt, sondern kann ein beliebiger physikalischer Parameter des Strömungsfeldes sein. Das Strömungsfeld beschreibt hierbei Flüsse bzw. Strömungen, welche materielle oder andere Eigenschaften, wie beispielsweise Kraftwirkungen (Wechselwirkungen) innerhalb eines räumlichen Gebietes transportieren.

Das mindestens eine Messsignal kann insbesondere von mindestens einer Emissionseinrichtung emittiert bzw. ausgesendet werden. Das mindestens eine Messsignal kann hierbei insbesondere eine elektromagnetische Welle und/oder eine akustische Welle sein. Das mindestens eine Messsignal kann hierbei insbesondere an jeweils einen Messpunkt ausgesendet werden, um mindestens einen Messwert in Bezug auf den mindestens einen Parameter an dem jeweiligen Messpunkt zu messen. Das Messen des mindestens einen Messwerts kann insbesondere ein Empfangen mindestens einer Reflexion des mindestens einen Messsignals umfassen, wobei die mindestens eine empfangene Reflexion in mindestens ein Datensignal umgewandelt werden kann.

Das Feststellen der Blockierung kann insbesondere ein Unterscheiden zwischen periodischen fehlerhaften Messwerten, wie aufgrund von periodischen Blockierungen, beispielsweise Blockierungen aufgrund einer Rotation der Rotorblätter der Turbine, von aperiodischen fehlerhaften Messwerten, wie aufgrund von aperiodischen Blockierungen, beispielsweise aufgrund von vorbeifliegenden Tieren, umfassen. Hierbei das Feststellen beispielsweise ein Analysieren eines Signal-Rausch-Verhältnisses eines reflektierten, blockierten Messsignals und/oder eine Entfernungsmessung der Blockierung von der mindestens einen Messeinheit umfassen.

Das Bestimmen des mindestens einen Parameters umfasst insbesondere bei Feststellung eines fehlerhaften Messwerts, beispielsweise aufgrund einer solchen Blockierung, ein Kompensieren von fehlerhaften Messwerten, um die Bildung von Resonanzen in dem bestimmten Parameter bzw. in dem Regelungssignal basierend auf dem bestimmten Parameter zu vermeiden bzw. zu verhindern. Hierzu kann das Kompensieren insbesondere eine Anwendung von mindestens einem Rekonstruktionsverfahren zur Ersetzung eines aufgrund der Blockierung fehlerhaften Messwerts, wie oben beschrieben, umfassen.

Das Verfahren kann ferner eine beliebige Kombination der in der vorliegenden Beschreibung beschriebenen Merkmale umfassen.

Ein weiterer Aspekt betrifft ein computerlesbares Speichermedium, umfassend Befehle, die bei der Ausführung durch einen Computer bzw. durch einen Prozessor diesen veranlassen, die Schritte des oben beschriebenen Verfahrens auszuführen.

Die Erfindung wird nachfolgend anhand von in Figuren exemplarisch illustrierten Ausführungsformen und Graphen ferner erläutert. Die in den Figuren gezeigten Ausführungsformen sind nicht als beschränkend zu interpretieren. Es zeigen:

**Figur 1:** Eine exemplarische Messeinheit mit vier Messstrahlen;

**Figur 2:** Eine graphische Darstellung der rotor-effektiven Windgeschwindigkeit basierend auf den Werten aus Tabelle 2 und Figur 1;

**Figur 3:** Eine exemplarische Windturbine mit einer Messeinheit;

**Figur 4:** Eine graphische Gegenüberstellung einer herkömmlichen Windfeldrekonstruktion und einer exemplarischen Windfeldrekonstruktion gemäß der vorliegenden Erfindung;

**Figur 5:** Ein Leistungsdichtespektrum für die in Figur 4 dargestellten herkömmliche Windfeldrekonstruktion und exemplarische Windfeldrekonstruktion gemäß der vorliegenden Erfindung

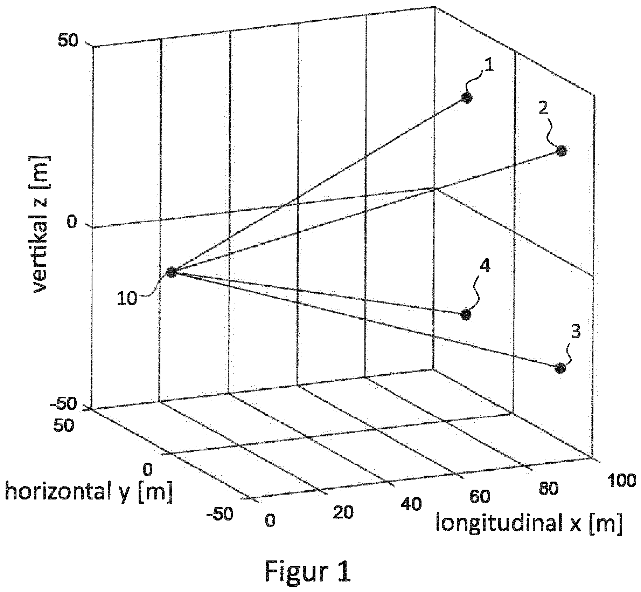

**Figur 1** zeigt eine exemplarische Messeinheit **10,** welche einen Messwert eines Strömungsfeldes an jeweils einem der vier Messpunkte **1, 2, 3, 4** misst. Insbesondere emittiert die Messeinheit **10** jeweils einen Messstrahl von der Messeinheit **10** zu dem entsprechenden Messpunkt **1, 2, 3, 4.** Die Daten und Koordinaten der Messpunkte **1, 2, 3, 4** entsprechen hierbei insbesondere den in Tabelle 2 oben dargestellten Daten. Hierbei misst die Messeinheit **10** konsekutiv die Messwerte des Strömungsfeldes von Messpunkt **1** bis Messpunkt **4,** wobei hierdurch ein Messzyklus der Messeinheit **10** definiert ist.

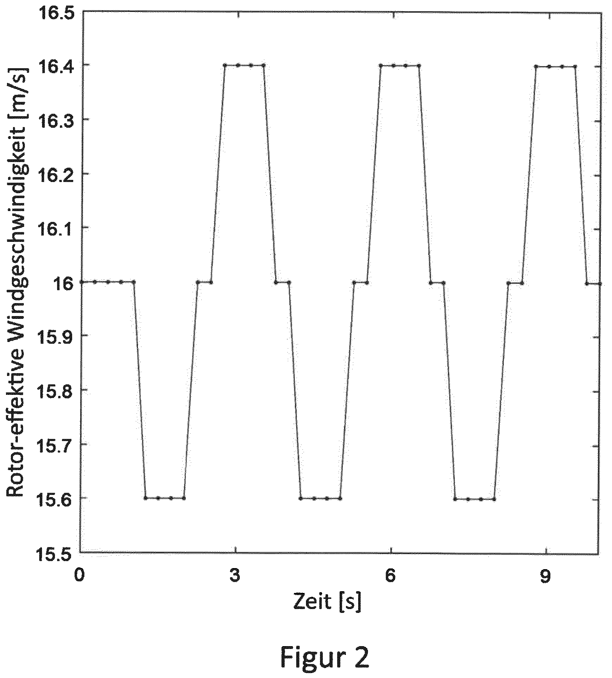

**Figur 2** zeigt eine graphische Darstellung der rotor-effektiven Windgeschwindigkeit basierend auf den Werten aus Tabelle 2 und Figur 1. Insbesondere stellen die Daten aus Tabelle 2 ein Strömungsfeld mit einer vertikalen Windscherung dar. Misst beispielsweise eine vierstrahlige Messeinheit **10,** wie in Figur 1 dargestellt in den Punkten von Tabelle 2 und gibt es eine vertikale lineare Scherung von 0.04 (m/s)/m, sind die Messwerte in den beiden oberen Punkten jeweils 17.2 m/s und die Messwerte in den beiden unteren Punkten jeweils 14.8 m/s. Entfällt beispielsweise jede sechste Messung aufgrund einer Blockierung eines Messstrahls, zum Beispiel durch die Blattabschattung, ergibt sich eine Resonanz in der bestimmten rotor-effektiven Windgeschwindigkeit bei 1/3 Hz, wie in Figur 2 dargestellt. Eine solche Resonanz kann, falls die bestimmte rotor-effektive Windgeschwindigkeit zur Regelung einer Turbine verwendet wird, zu einer erhöhten Last der Turbine führen.

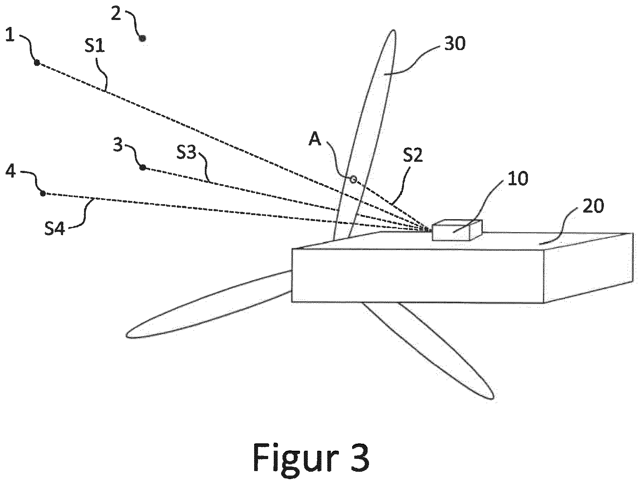

**Figur 3** zeigt eine exemplarische Windturbine mit einer Messeinheit **10.** Wie in Figur 1 gezeigt, misst die Messeinheit **10** einen Messwert eines Strömungsfeldes an jeweils einem der vier Messpunkte **1, 2, 3, 4.** Insbesondere emittiert die Messeinheit **10** jeweils einen Messstrahl von der Messeinheit **10** zu dem entsprechenden Messpunkt **1, 2, 3, 4.**

Die Messeinheit **10** ist hierbei an einer Gondel **20** einer Windturbine angeordnet. Hierbei ist die gezeigte Anordnung der Messeinheit **10** jedoch nur exemplarisch zu interpretieren. Die Messeinheit **10** kann vielmehr an einer beliebigen Stelle der Gondel **20** angeordnet werden, solange die Messstrahlen **S1, S2, S3, S4** der Messeinheit **10** noch die Messpunkte **1, 2, 3, 4** zumindest temporär erfassen können. Hierbei können auch mehrere Messeinheiten **10** an der Gondel **20** angeordnet werden, beispielsweise jeweils auf der oberen, einem Fuß der Windturbine abgewandten Seite und auf einer unteren, dem Fuß der Windturbine zugewandten Seite.

Figur 3 zeigt insbesondere eine Konfiguration der Windturbine, in der die Messstrahlen **S1, S3,** und **S4** ungehindert von der Messeinheit **10** die jeweiligen Messpunkte **1, 3,** und **4** erfassen können. Messstrahl **S2,** der von der Messeinheit **10** zu Messpunkt **2** ausgesendet wird, trifft jedoch in Punkt **A** auf ein Rotorblatt **30** der Windturbine und wird durch dieses blockiert. Somit wird von der Messeinheit **10** ein fehlerhafter Messwert für Messpunkt **2** gemessen, während ein Regelungssystem (nicht gezeigt) die Blockierung durch Rotorblatt **30** feststellt und den fehlerhaften Messwert kompensiert.

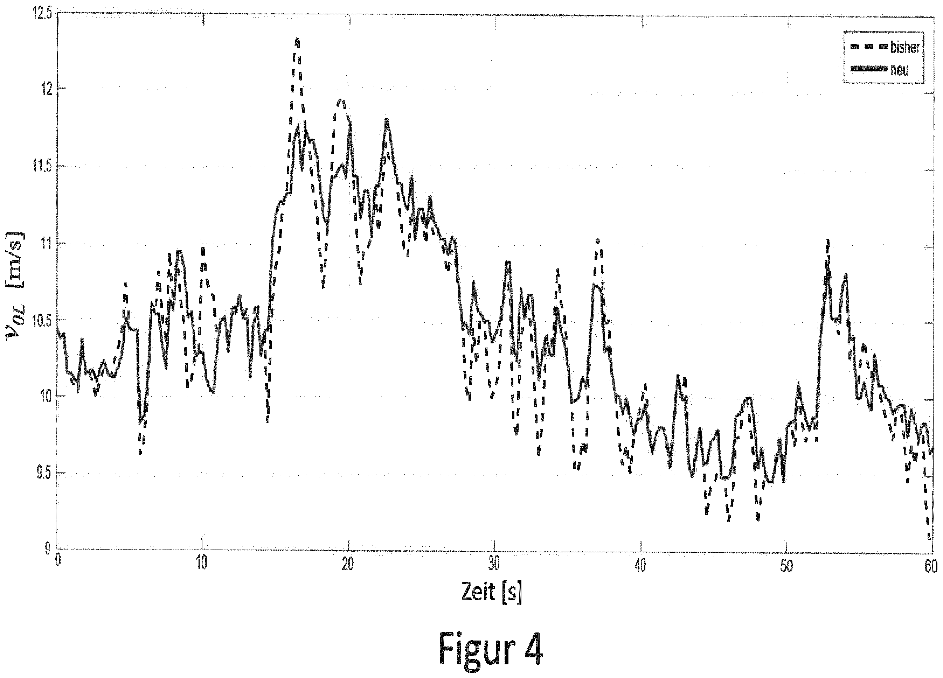

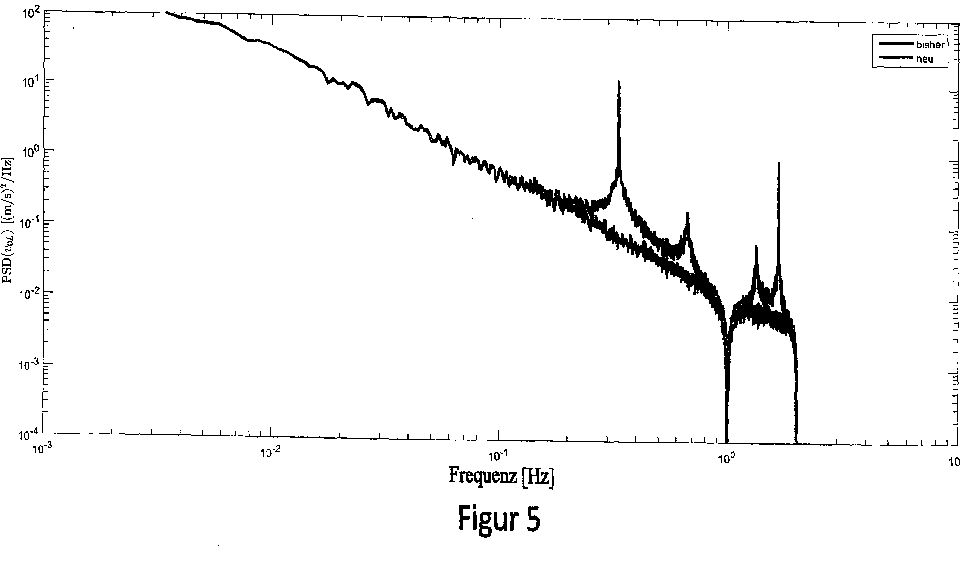

**Figur 4** zeigt eine graphische Gegenüberstellung einer herkömmlichen Windfeldrekonstruktion und einer exemplarischen Windfeldrekonstruktion gemäß der vorliegenden Erfindung. Insbesondere zeigt der Graph der Figur 4 eine Darstellung der rotor-effektiven Windgeschwindigkeit für eine Simulation eines turbulenten Windfeldes für ein vierstrahliges Lidar-System mit den Messpunkten **1, 2, 3, 4** aus Tabelle 2. **Figur 5** zeigt ein Leistungsdichtespektrum (engl.: *power spectral density,* PSD) für die in Figur 4 dargestellten herkömmliche Windfeldrekonstruktion und exemplarische Windfeldrekonstruktion gemäß der vorliegenden Erfindung.

Hier wurde ein Windfeld mit mittlerer Windgeschwindigkeit von 10 m/s und einer Turbulenzintensität von 6% erzeugt und mit dem vier-strahligen Lidar-System abgetastet. Wie für Figur 2 wurde eine Blattabschattung für jeden sechsten Wert simuliert. Das bisherige Verfahren erzeugt Resonanzen bei 1/3 Hz und den Oberschwingungen (2/3 Hz, 4/3 Hz und 5/3 Hz). Wird dieses Signal für die Lidar-basierte Regelung verwendet, werden dadurch Schwingungen der Windenergieanlage an diesen Frequenzen angeregt. Dies kann zu einer Lasterhöhung anstelle einer Lastreduktion führen.

Die Ergebnisse zeigen klar, dass das neue Verfahren keine Resonanz mit der Blattabschattung erzeugt. Da hier über einen vollen Messzyklus von 1 s gemittelt wird, ergeben sich die typischen Absenkungen im Spektrum beim 1 Hz und 2 Hz. Diese sind jedoch nicht relevant für die Lidar-basierte Regelung, beispielsweise eine Lidar-basierte Vorsteuerung.

Die in der Beschreibung beschriebenen Ausführungsformen sind nicht als beschränkend zu interpretieren.

**Bezugszeichenliste**

| | |
|---|---|
| **1, 2, 3, 4** | Messpunkte |
| **10** | Messeinheit |
| **20** | Gondel |
| **30** | Rotorblatt |

**S1, S2, S3, S4** Messstrahlen
**A** Punkt (Auftreffpunkt auf dem Rotorblatt)

**Patentansprüche**

1. Ein Regelungssystem für eine Turbine, umfassend:

   eine Regelungseinheit, wobei die Regelungseinheit ausgelegt ist, basierend auf mindestens einem bestimmten Parameter eines Strömungsfeldes stromaufwärts von der Turbine, ein Regelungssignal zur Regelung der Turbine zu erzeugen;
   mindestens eine Messeinheit, wobei die mindestens eine Messeinheit ausgelegt ist, mindestens einen Messwert in Bezug auf den mindestens einen Parameter des Strömungsfeldes basierend auf mindestens einem Messsignal zu messen, wobei jedes Messsignal an jeweils einen Messpunkt (1, 2, 3, 4) des Strömungsfeldes aussendbar ist;
   mindestens eine Bestimmungseinheit, wobei die mindestens eine Bestimmungseinheit ausgelegt ist, den mindestens einen Parameter des Strömungsfeldes basierend auf dem mindestens einen gemessenen Messwert zu bestimmen,
   wobei die mindestens eine Bestimmungseinheit ausgelegt ist, einen fehlerhaften Messwert aufgrund einer Blockierung mindestens eines Messsignals zwischen der mindestens einen Messeinheit und dem jeweiligen Messpunkt (1, 2, 3, 4), insbesondere durch ein Rotorblatt (30) der Turbine, festzustellen und mindestens ein Rekonstruktionsverfahren zur Ersetzung des fehlerhaften Messwerts anzuwenden, um eine daraus entstehende fehlerhafte Bestimmung des mindestens einen Parameters des Strömungsfeldes zu kompensieren.

2. Regelungssystem nach Anspruch 1, wobei die Turbine eine Windturbine ist und wobei das Strömungsfeld ein Windfeld ist, und, optional,
   wobei der mindestens eine bestimmte Parameter des Windfeldes eine rotor-effektive Windgeschwindigkeit und/oder eine Windscherung und/oder Windrichtung umfasst.

3. Regelungssystem nach einem der vorherigen Ansprüche, wobei die mindestens eine Regelungseinheit die mindestens eine Bestimmungseinheit umfasst, oder
   wobei die mindestens eine Messeinheit die mindestens eine Bestimmungseinheit umfasst.

4. Regelungssystem nach einem der vorherigen Ansprüche, wobei die mindestens eine Messeinheit ausgelegt ist, mindestens ein Qualitätssignal, insbesondere ein Signal-Rausch-Verhältnis, parallel zu dem mindestens einen Messsignal auszugeben, und wobei die mindestens eine Bestimmungseinheit ausgelegt ist, basierend auf dem mindestens einen Qualitätssignal die Fehlerhaftigkeit des Messwerts, insbesondere aufgrund der Blockierung des jeweiligen Messsignals zwischen der mindestens einen Messeinheit und dem jeweiligen Messpunkt (1, 2, 3, 4) festzustellen.

5. Regelungssystem nach einem der vorherigen Ansprüche, wobei die mindestens eine Messeinheit als ein Lidar-System ausgebildet ist, und, optional,
   wobei das mindestens eine Messsignal des Lidar-Systems mindestens einen Messstrahl (S1, S2, S3, S4), bevorzugt vier Messstrahlen (S1, S2, S3, S4) umfasst.

6. Regelungssystem nach einem der vorherigen Ansprüche, wobei die mindestens eine Bestimmungseinheit ausgelegt ist, den mindestens einen Parameter des Strömungsfeldes basierend auf einer Menge von Messpunkten (1, 2, 3, 4), insbesondere vorbestimmten Messpunkten (1, 2, 3, 4) zu bestimmen.

7. Regelungssystem nach Anspruch 6, wobei die mindestens eine Bestimmungseinheit ausgelegt ist, die fehlerhafte Bestimmung des mindestens einen Parameters des Strömungsfeldes durch Ersetzen eines fehlerhaften Messwerts durch einen Messwert eines anderen Messpunkts (1, 2, 3, 4) der Menge von Messpunkten (1, 2, 3, 4), bevorzugt durch einen Messwert eines dem jeweiligen Messpunkt (1, 2, 3, 4) nächstliegenden anderen Messpunkt (1, 2, 3, 4) der Menge von Messpunkten (1, 2, 3, 4) zu kompensieren.

8. Regelungssystem nach Anspruch 6 oder 7, wobei die mindestens eine Bestimmungseinheit ausgelegt ist, die fehlerhafte Bestimmung des mindestens einen Parameters des Strömungsfeldes durch Ersetzen eines fehlerhaften Messwerts durch einen geschätzten Messwert basierend auf Messwerten von mindestens zwei anderen Messpunkten (1, 2, 3, 4) der Menge von Messpunkten (1, 2, 3, 4) zu kompensieren.

9. Regelungssystem nach einem der vorherigen Ansprüche, wobei die mindestens eine Bestimmungseinheit ausgelegt ist, die fehlerhafte Bestimmung des mindestens einen Parameters des Strömungsfeldes durch Ersetzen eines fehlerhaften Messwerts durch einen vorherigen, insbesondere direkt vorherigen Messwert des jeweils einen Messpunkts (1, 2, 3, 4) zu kompensieren.

10. Regelungssystem nach einem der vorherigen Ansprüche, wobei die mindestens eine Bestimmungseinheit ausgelegt ist, die fehlerhafte Bestimmung des mindestens einen Parameters des Strömungsfeldes durch Ersetzen eines fehlerhaften Messwerts durch einen interpolierten, insbesondere linear interpolierten Messwert basierend auf mindestens zwei vorherigen Messwerten des jeweils einen Messpunkts (1, 2, 3, 4) zu kompensieren.

11. Regelungssystem nach einem der vorherigen Ansprüche, wobei die mindestens eine Bestimmungseinheit ausgelegt ist, die fehlerhafte Bestimmung des mindestens einen Parameters des Strömungsfeldes durch Ersetzen eines fehlerhaften Messwerts durch einen interpolierten, insbesondere linear interpolierten Messwert basierend auf mindestens einem vorherigen und einem nächsten Messwert des jeweils einen Messpunkts (1, 2, 3, 4) zu kompensieren.

12. Regelungssystem nach einem der vorherigen Ansprüche, wobei die Regelungseinheit umfasst:

einen Feedbackregler, wobei der Feedbackregler mindestens ein Feedbackregelsignal zur Regelung der Turbine basierend auf Messsignalen der Turbine, insbesondere einer Rotordrehzahl der Turbine und/oder einer Generatordrehzahl der Turbine erzeugt; und/oder
einen Feedforwardregler, wobei der Feedforwardregler mindestens ein Feedforwardregelsignal zur Regelung der Turbine basierend auf mindestens dem mindestens einen bestimmten Parameter des Strömungsfeldes erzeugt.

13. Regelungssystem nach einem der vorherigen Ansprüche, wobei die mindestens eine Bestimmungseinheit ferner ausgelegt ist, eine elektromagnetische Interferenz und/oder eine Schwingung der Turbine und/oder eine Schwingung einer Halterung der Messeinheit festzustellen und eine daraus entstehende fehlerhafte Bestimmung des mindestens einen Parameters des Strömungsfeldes zu kompensieren.

14. Windturbine umfassend ein Regelungssystem gemäß einem der vorherigen Ansprüche und mindestens ein Rotorblatt (30).

15. Verfahren zur Regelung einer Turbine, umfassend:

Aussenden mindestens eines Messsignals von mindestens einer Messeinheit an jeweils einen Messpunkt (1, 2, 3, 4) eines Strömungsfeldes stromaufwärts von der Turbine;
Messen mindestens eines Messwerts in Bezug auf den mindestens einen Parameter des Strömungsfeldes basierend auf dem mindestens einen Messsignal;
Feststellen eines fehlerhaften Messwerts aufgrund einer Blockierung mindestens eines Messsignals zwischen der mindestens einen Messeinheit und dem jeweiligen Messpunkt (1, 2, 3, 4), insbesondere durch ein Rotorblatt (30) der Turbine;
Bestimmen des mindestens einen Parameters des Strömungsfeldes basierend auf dem mindestens einen gemessenen Messwert, wobei eine fehlerhafte Bestimmung des mindestens einen Parameters des Strömungsfeldes durch Anwenden eines Rekonstruktionsverfahrens zur Ersetzung des fehlerhaften Messwerts kompensiert wird; und
Regeln der Turbine basierend auf dem mindestens einen Parameter eines Strömungsfeldes.

**Claims**

1. A control system for a turbine, comprising;
a control unit, the control unit being configured to generate a control signal for controlling the turbine based on at least one specific parameter of a flow field upstream of the turbine;
at least one measurement unit, the at least one measurement unit being configured to measure at least one measurement value with regard to the at least one parameter of the flow field based on at least one measurement signal, each measurement signal being transmissible at respectively one measurement point (1, 2, 3, 4) of the flow field;

at least one determination unit, the at least one determination unit being configured to determine the at least one parameter of the flow field based on the at least one measured measurement value,

wherein the at least one determination unit is configured to detect an incorrect measurement value due to a blockage of at least one measurement signal between the at least one measurement unit and the respective measurement point (1, 2, 3, 4), particularly by a rotor blade (30) of the turbine, and to apply at least one reconstruction method for replacing the incorrect measurement value to compensate a resulting incorrect determination of the at least one parameter of the flow field.

2. The control system according to claim 1, wherein the turbine is a wind turbine, and wherein the flow field is a wind field, and

wherein, optionally, the at least one determined parameter of the wind field comprises a rotor-effective wind speed and/or a wind shear and/or a wind direction.

3. The control system according to one of the preceding claims, wherein the at least one control unit comprises the at least one determination unit, or

wherein the at least one measurement unit comprises the at least one determination unit.

4. The control system according to one of the preceding claims, wherein the at least one measurement unit is configured to output at least one quality signal, particularly a signal-to-noise ratio, in parallel with the at least one measurement signal, and wherein the at least one determination unit is configured to detect the incorrectness of the measurement value, particularly due to the blockage of the respective measurement signal between the at least one measurement unit and the respective measurement point (1, 2, 3, 4) based on the at least one quality signal.

5. The control system according to one of the preceding claims, wherein the at least one measurement unit is configured as a lidar system, and

wherein, optionally, the at least one measurement signal of the lidar system comprises at least one measurement beam (S1, S2, S3, S4), preferably four measurement beams (S1, S2, S3, S4).

6. The control system according to one of the preceding claims, wherein the at least one determination unit is configured to determine the at least one parameter of the flow field based on a set of measurement points (1, 2, 3, 4), particularly of predetermined measurement points (1, 2, 3, 4).

7. The control system according to claim 6, wherein the at least one determination unit is configured to compensate the incorrect determination of the at least one parameter of the flow field by replacing an incorrect measurement value with a measurement value of another measurement point (1, 2, 3, 4) from the set of measurement points (1, 2, 3, 4), preferably with a measurement value of another measurement point (1, 2, 3, 4) from the set of measurement points (1, 2, 3, 4) which is closest to the respective measurement point (1, 2, 3, 4).

8. The control system according to claim 6 or 7, wherein the at least one determination unit is configured to compensate the incorrect determination of the at least one parameter of the flow field by replacing an incorrect measurement value with an estimated measurement value based on measurement values of at least two other measurement points (1, 2, 3, 4) from the set of measurement points (1, 2, 3, 4).

9. The control system according to one of the preceding claims, wherein the at least one determination unit is configured to compensate the incorrect determination of the at least one parameter of the flow field by replacing an incorrect measurement value with a previous, particularly a directly previous, measurement value of the respective one measurement point (1, 2, 3, 4).

10. The control system according to one of the preceding claims, wherein the at least one determination unit is configured to compensate the incorrect determination of the at least one parameter of the flow field by replacing an incorrect measurement value with a interpolated, particularly a linearly interpolated, measurement value based on at least two previous measurement values of the respective one measurement point (1, 2, 3, 4).

11. The control system according to one of the preceding claims, wherein the at least one determination unit is configured to compensate the incorrect determination of the at least one parameter of the flow field by replacing an incorrect measurement value with an interpolated, particularly a linearly interpolated, measurement value based on at least one previous and a next measurement value of the respective one measurement point (1, 2, 3, 4).

**12.** The control system according to one of the preceding claims, wherein the control unit comprises:

a feedback controller, the feedback controller generating at least one feedback control signal for controlling the turbine based on measurement signals of the turbine, particularly a rotor speed of the turbine and/or a generator speed of the turbine; and/or

a feed forward controller, the feed forward controller generating at least one feed forward control signal for controlling the turbine based on at least the at least one determined parameter of the flow field.

**13.** The control system according to one of the preceding claims, wherein the at least one determination unit is further configured to detect an electromagnetic interference and/or a vibration of the turbine and/or a vibration of a support of the measurement unit and to compensate a resulting incorrect determination of the at least one parameter of the flow field.

**14.** A wind turbine comprising a control system according to one of the preceding claims and at least one rotor blade (30).

**15.** A method for controlling a turbine, comprising:

transmitting at least one measurement signal from at least one measurement unit at respectively one measurement point (1, 2, 3, 4) of a flow field upstream of the turbine;

measuring at least one measurement value with regard to the at least one parameter of the flow field based on the at least one measurement signal;

detecting an incorrect measurement value

due to a

blockage of at least one measurement signal between the at least one measurement unit and the respective measurement point (1, 2, 3, 4), particularly by a rotor blade (30) of the turbine;

determining the at least one parameter of the flow field based on the at least one measured measurement value, an incorrect determination of the at least one parameter of the flow field being compensated by applying a reconstruction method for replacing the incorrect measurement value; and

controlling the turbine based on the at least one parameter of a flow field.

**Revendications**

**1.** Système de régulation pour une turbine, comprenant :

un module de régulation, dans lequel le module de régulation est conçu pour générer un signal de régulation pour la régulation de la turbine en se basant sur au moins un paramètre déterminé d'un champ d'écoulement en amont de la turbine ;

au moins un module de mesure, dans lequel l'au moins un module de mesure est conçu pour mesurer au moins une valeur de mesure par rapport à l'au moins un paramètre du champ d'écoulement en se basant sur au moins un signal de mesure, dans lequel chaque signal de mesure peut être émis à chaque fois à un point de mesure (1, 2, 3, 4) du champ d'écoulement ;

au moins un module de détermination, dans lequel l'au moins un module de détermination est conçu pour déterminer l'au moins un paramètre du champ d'écoulement en se basant sur l'au moins une valeur de mesure mesurée,

dans lequel 1' au moins un module de détermination est conçu pour constater une valeur de mesure erronée en raison d'un blocage d'au moins un signal de mesure entre l'au moins un module de mesure et le point de mesure respectif (1, 2, 3, 4), notamment par une pale de rotor (30) de la turbine, et pour appliquer au moins un procédé de reconstruction pour le remplacement de la valeur de mesure erronée pour compenser une détermination erronée en résultant de l'au moins un paramètre du champ d'écoulement.

**2.** Système de régulation selon la revendication 1, dans lequel la turbine est une éolienne et dans lequel le champ d'écoulement est un champ de vent, et, en option,

dans lequel l' au moins un paramètre déterminé du champ de vent comprend une vitesse du vent efficace du rotor et/ou un cisaillement du vent et/ou sens du vent.

**3.** Système de régulation selon une des revendications précédentes, dans lequel l'au moins un module de régulation comprend l'au moins un module de détermination, ou

dans lequel l'au moins un module de mesure comprend l'au moins un module de détermination.

4. Système de régulation selon une des revendications précédentes, dans lequel l'au moins un module de mesure est conçu pour émettre au moins un signal de qualité, notamment un rapport signal-bruit, parallèlement à l'au moins un signal de mesure, et dans lequel l'au moins un module de détermination est conçu pour constater le caractère erroné de la valeur de mesure en se basant sur l'au moins un signal de qualité, notamment en raison du blocage du signal de mesure respectif entre l'au moins un module de mesure et le point de mesure respectif (1, 2, 3, 4).

5. Système de régulation selon une des revendications précédentes, dans lequel l'au moins un module de mesure est réalisé en tant que système Lidar, et, en option, dans lequel l'au moins un signal de mesure du système Lidar comprend au moins un rayon de mesure (S1, S2, S3, S4), de préférence quatre rayons de mesure (S1, S2, S3, S4).

6. Système de régulation selon une des revendications précédentes, dans lequel l'au moins un module de détermination est conçu pour déterminer l'au moins un paramètre du champ d'écoulement en se basant sur une quantité de points de mesure (1, 2, 3, 4), notamment de points de mesure prédéterminés (1, 2, 3, 4).

7. Système de régulation selon la revendication 6, dans lequel l'au moins un module de détermination est conçu pour compenser la détermination erronée de l'au moins un paramètre du champ d'écoulement par remplacement d'une valeur de mesure erronée par une valeur de mesure d'un autre point de mesure (1, 2, 3, 4) de la quantité de points de mesure (1, 2, 3, 4), de préférence par une valeur de mesure d'un autre point de mesure (1, 2, 3, 4) le plus proche du point de mesure respectif (1, 2, 3, 4) de la quantité de points de mesure (1, 2, 3, 4).

8. Système de régulation selon la revendication 6 ou 7, dans lequel l'au moins un module de détermination est conçu pour compenser la détermination erronée de l'au moins un paramètre du champ d'écoulement par remplacement d'une valeur de mesure erronée par une valeur de mesure estimée en se basant sur des valeurs de mesure d'au moins deux autres points de mesure (1, 2, 3, 4) de la quantité de points de mesure (1, 2, 3, 4).

9. Système de régulation selon une des revendications précédentes, dans lequel l'au moins un module de détermination est conçu pour compenser la détermination erronée de l'au moins un paramètre du champ d'écoulement par remplacement d'une valeur de mesure erronée par une valeur de mesure précédente, notamment directement précédente, du point de mesure en question respectif (1, 2, 3, 4).

10. Système de régulation selon une des revendications précédentes, dans lequel l'au moins un module de détermination est conçu pour compenser la détermination erronée de l'au moins un paramètre du champ d'écoulement par remplacement d'une valeur de mesure erronée par une valeur de mesure interpolée, notamment interpolée linéairement, en se basant sur au moins deux valeurs de mesure précédentes du point de mesure en question respectif (1, 2, 3, 4).

11. Système de régulation selon une des revendications précédentes, dans lequel l'au moins un module de détermination est conçu pour compenser la détermination erronée de l'au moins un paramètre du champ d'écoulement par remplacement d'une valeur de mesure erronée par une valeur de mesure interpolée, notamment interpolée linéairement, en se basant sur au moins une valeur de mesure précédente et une valeur de mesure suivante du point de mesure en question respectif (1, 2, 3, 4).

12. Système de régulation selon une des revendications précédentes, dans lequel le module de régulation comprend :

un régulateur de rétroaction, dans lequel le régulateur de rétroaction génère au moins un signal de régulation de rétroaction pour la régulation de la turbine en se basant sur des signaux de mesure de la turbine, notamment d'une vitesse de rotation de rotor de la turbine et/ou d'une vitesse de rotation de générateur de la turbine ; et/ou un régulateur de réaction positive, dans lequel le régulateur de réaction positive génère au moins un signal de régulation de réaction positive pour la régulation de la turbine en se basant sur au moins l'au moins un paramètre déterminé du champ d'écoulement.

13. Système de régulation selon une des revendications précédentes, dans lequel l'au moins un module de détermination est en outre conçu pour constater une interférence électromagnétique et/ou une oscillation de la turbine et/ou une oscillation d'une fixation du module de mesure et pour compenser une détermination erronée en résultant de l'au moins un paramètre du champ d'écoulement.

14. Eolienne comprenant un système de régulation selon une des revendications précédentes et au moins une pale de rotor (30).

15. Procédé de régulation d'une turbine, comprenant :

émission d'au moins un signal de mesure par au moins un module de mesure à chaque fois à un point de mesure (1, 2, 3, 4) d'un champ d'écoulement en amont de la turbine ;
mesure d'au moins une valeur de mesure par rapport à l'au moins un paramètre du champ d'écoulement en se basant sur l'au moins un signal de mesure ;
constatation d'une valeur de mesure erronée en raison d'un blocage d'au moins un signal de mesure entre l'au moins un module de mesure et le point de mesure respectif (1, 2, 3, 4), notamment par une pale de rotor (30) de la turbine ;
détermination de l'au moins un paramètre du champ d'écoulement en se basant sur l'au moins une valeur de mesure mesurée, dans lequel une détermination erronée de l'au moins un paramètre du champ d'écoulement est compensée par application d'un procédé de reconstruction pour le remplacement de la valeur de mesure erronée ; et
régulation de la turbine en se basant sur l'au moins un paramètre d'un champ d'écoulement.

Figur 1

Figur 2

Figur 3

Figur 4

**Figur 5**

**IN DER BESCHREIBUNG AUFGEFÜHRTE DOKUMENTE**

**In der Beschreibung aufgeführte Patentdokumente**

- US 2017167470 A1
- WO 2017149657 A1
- DE 102016212362

**In der Beschreibung aufgeführte Nicht-Patentliteratur**

- Optimal Trajectory Tracking Control for Wind Turbines During Operating Region Transitions. **AHO JACOB et al.** 2015 American Control Conference (ACC). IEEE, 17. Juni 2013, 1424-1429
- **DR. DAVID SCHLIPF.** Lidar-Assisted Control Concepts for Wind Turbines. Universität Stuttgart, 2016